Europäisches Patentamt

European Patent Office

Office européen des brevets

(19)

(11) Veröffentlichungsnummer: **0 004 268**
**A1**

(12) EUROPÄISCHE PATENTANMELDUNG

(21) Anmeldenummer: 78200265.3

(22) Anmeldetag: 27.10.78

(51) Int. Cl.²: **C 08 J 3/22**

(30) Priorität: 18.03.78 DE 2811922

(43) Veröffentlichungstag der Anmeldung: **03.10.79**
Patentblatt 79/20

(84) Benannte Vertragsstaaten: **BE DE FR GB NL SE**

(71) Anmelder: **Karl Finke, Hatzfelder Strasse 174-176, D-5600 Wuppertal-Barmen (DE)**

(72) Erfinder: **Knepper, Siegfried, Dietrich Bonhoeffer Strasse 46, D-5608 Radevormwald (DE)**

(74) Vertreter: **Frühbuss, Heinrich, Dr.rer.nat., Franz-Fischer-Weg 61, D-4300 Essen 13 (DE)**

(54) Harz-Farbkonzentrate für die Einfärbung von Harzen und Verfahren zu deren Herstellung.

(57) Harz-Farbstoffkonzentrate für die Einfärbung von Harzen werden durch inniges Vermischen von pulverförmigen oder granulierten Harzen mit einem Farbstoff und einem Wachs bei einer Temperatur von etwa 35–150° C und Abkühlen der Mischung in Form von granulierten eingefärbten Harzen hergestellt.

Die Wachskomponente muß bei Raumtemperatur fest und bei der Mischtemperatur flüssig sein.

EP 0 004 268 A1

ACTORUM AG

Karl Finke
Hatzfelder Str. 174

5600 Wuppertal-Barmen

Harz-Farbkonzentrate für die Einfärbung von Harzen

Die Erfindung bezieht sich auf neue grob- und feinkörnige Harz-
Farbkonzentrate und auf deren Herstellung.

Bekanntlich werden thermoplastische Harze in der Regel dem Verarbeiter in nicht eingefärbten Zustand als Pulver oder Granulat
zur Verfügung gestellt. Die Einfärbung der Harze zum Zwecke der
Herstellung farbiger Gegenstände erfolgt im allgemeinen durch
Zugeben der Farbstoffe zum Harz vor oder bei dessen Eingabe in
die Verarbeitungsmaschine, z. B. Spritzgußmaschine, Kneter oder
Extruder. Da bei dieser Technik die Vermischung von Farbstoff
mit dem Harz häufig unvollständig bleibt, werden oft keine homogenen, sondern stippige Ausfärbungen erzielt.

Man bevorzugt daher für die Einfärbung von Harzen Konzentrate
aus Farbstoff und Harz, in denen Harz mit großen Mengen eines
Farbstoffes innig miteinander verschmolzen sind. Bei der Einfärbung wirkt das Harz im Harz-Farbstoff-Konzentrat nach Art
eines Lösungsvermittlers zwischen Farbstoff und dem einzufärbenden Harz, so daß homogenere Ausfärbungen erzielt werden.

Die Herstellung der Harz-Farbkonzentrate, die auch "Master Batch"
genannt werden, geschieht analog der Einfärbung von thermoplastischen Harzen mit Farbstoffen in Spritzmaschinen, Knetern oder

- 2 -

Extrudern, wobei lediglich ein besonders hohes Verhältnis von Farbstoff zu Harz gewählt und das miteinander verschmolzene Material schließlich zu einem Granulat zerkleinert wird.

Es liegt auf der Hand, daß diese Art der Herstellung von Harz-Farbkonzentraten nur für große Mengen lohnend ist. Für die Herstellung kleiner Mengen von bestimmter Färbung ist dieses Verfahren unwirtschaftlich, da Spritzmaschinen, Extruder und Kneter nur mit größeren Materialdurchsätzen lohnend betrieben werden können.

Die Erfindung schafft die Möglichkeit, Harz-Farbkonzentrate aus anorganischen und organischen Farbstoffen auch in kleinen Mengen kostengünstig herzustellen. Diese Aufgabe wird erfindungsgemäß dadurch gelöst, daß Harze bei einer Temperatur von etwa 35 - 150 ° C, vorzugsweise bei 40 - 90 ° C mit einem Farbstoff und einem bei Normaltemperatur festen, aber bei der Mischtemperatur schmelzendem Wachs innig vermischt und dieses Gemisch abgekühlt wird. Das Produkt stellt ein fein- bis grobkörnig gefärbtes Material dar, welches als "Master Batch" für thermoplastische und duroplastische Harze geeignet ist. Es besitzt, je nach Korngröße des Harzgranulats, eine Korngröße von etwa 0,1 - 6 mm. Harz-Farbkonzentrate aus Harzen mit einem breiten Körnungsband von z. B. 2 - 5 mm besitzen im allgemeinen gleichfalls ein breites Körnungsband und können durch Sieben in spezielle Kornfraktionen zerlegt werden. Untersucht man erfindungsgemäße Agglomerate auf ihre Zusammensetzung, ggf. nach Zerstörung einzelner Körner, so erkennt man mit bloßem Auge oder mit der Lupe, daß stets ein oder mehrere Harzgranulate gleichzeitig mit einem angeschmolzenen Wachs-Farbstoffgemisch zu Agglomeraten verbunden sind.

Erfindungsgemäß erzeugte Harz-Farbkonzentrate eignen sich hervorragend für die Einfärbung verschiedenartiger Harze. Offenbar wirken die Wachse zusätzlich als Lösungsvermittler zu den einzufärbenden Harzen und bewirken eine gute Verbindung zwischen Harz und Farbstoff im Harz-Farbkonzentrat, so daß auf ein Verschmelzen der Komponenten im Extruder oder Kneter verzichtet werden kann.

Die Erfindung eignet sich für die Herstellung aller gewünschten Harz-Farbkonzentrate in großen und kleinen Mengen. Gute Ergebnisse werden erzielt, indem zunächst ein Gemisch aus Wachs und Farbstoff erzeugt und dieses Gemisch zu dem auf die Anfärbungstemperatur erhitzten Harz gegeben wird. Stattdessen kann man diese beiden Komponenten auch separat nacheinander oder gleichzeitig dem Harz zumischen oder alle 3 Komponenten im Mischer gleichzeitig aufheizen. Die rieselfähig anfallende Masse stellt ein hervorragend wirksames "Master Batch" dar, welches wegen seiner besonders guten Rieselfähigkeit genau dosiert in die Verarbeitungsmaschine eingegeben werden kann. Die beste Verbindung unter den Komponenten wird erreicht durch Zugabe trockener Gemische aus Farbstoff und Wachs zu einem aufgeheizten Harz.

Als Farbstoffe kommen alle trockenen löslichen und unlöslichen Farbstoffe in Betracht, die in der Regel in Pulverform erhältlich sind. Diese Pulver besitzen im allgemeinen eine Korngröße von 0,1 - 100µm. Die Korngröße der Teilchen des vorgelegten Harzes soll zwischen etwa 1 und 6 mm liegen. Es läßt sich indessen auch gröberes und feineres Harz-Material zu Harz-Farbkonzentraten verarbeiten. Die in Frage kommenden Wachse kommen in Form von Pulvern, Schuppen und Tafeln in den Handel.

Das Gewichtsverhältnis von Farbstoff zu Harz liegt in den für die Herstellung von Harz-Farbkonzentraten in Verarbeitungsmaschinen bekannten Bereichen. Auf ein Gewichtsteil Harz kann man demgemäß 0,5 - 6 Gewichtsteile an Farbstoff geben. Die erforderliche Wachsmenge ist gering. Auf ein Gewichtsteil Harz entfallen 1/10 - 1/2 Gewichtsteile eines Wachses.

Als Wachse eignen sich alle bekannten Wachse oder Wachsgemische mit einem Schmelzpunkt über Normaltemperatur, d. h. alle bei Normaltemperatur praktisch festen Wachse, die über 35 - 40 ° C ohne Zersetzung schmelzen. Eine erschöpfende Aufzählung aller in Frage kommenden natürlichen und synthetischen Wachse ist verständlicherweise nicht möglich. Es sei hierzu auf das Chemie-Lexikon von Römpp, 7. Auflage, Kap. "Wachse, Seite 3857 - 3858, verwiesen. Da man in der Technik ungern mit Produkten mit schwankenden Eigenschaften arbeitet, wird man den synthetischen Wachsen mit spezifischen Eigenschaften und insbesondere spezifischen Schmelzpunkten den Vorzug geben.

Beispiele für geeignete Wachse sind die Wachse der Firma Farbwerke Hoechst AG unter dem Namen O.O-Wachse (teilverseiftes Esterwachs aus Montansäuren mit einem Erstarrungspunkt von 74 - 79 ° C), E-Wachse (Esterwachse aus Montansäuren und einem Erstarrungspunkt von 70 - 74 ° C), G-Wachse (Amidwachse mit einem Erstarrungspunkt von 135 - 140 ° C), GL3-Wachs (synthetisches teilverseiftes Wachs mit einem Erstarrungspunkt von 88 - 93 ° C), PA 190-Wachs (Polyäthylenwachs, Molekulargewicht ca. 9000 mit einem Erstarrungspunkt von 127 - 133 ° C), PA 250-Wachs (Polyäthylenwachs mit einem Molekulargewicht von ca. 2000 und einem Erstarrungspunkt von 90 - 94 ° C). Ferner sind geeignet Wachse der Firma BASF, Ludwigshafen, z. B. AL 61-Wachs (Polyäthylenwachs mit mittlerer Dichte und mittlerem Molekulargewicht mit einem Erstarrungspunkt von 98 - 103 ° C).

Bevorzugt geeignet sind Wachse, die gleichzeitig eine gewisse oberflächenaktive Wirkung besitzen und somit einen zusätzlichen
Beitrag zur gleichmäßigen Verteilung des jeweiligen Farbstoffes
am Harz leisten. Geeignet sind z. B. Polyoxyäthylen- Alkylaryläther (Renex 649 und 650) sowie Polyoxyäthylen-oxypropylen-
Monostearat.

Hervorragend gute Wirkungen speziell in Bezug auf Verteilerfreudigkeit der erfindungsgemäßen Harz-Farbkonzentrate bei ihrer
Verwendung sind sorbitanhaltige Tenside, mit denen besonders homogene Ausfärbungen erzielt werden. In Frage kommen insbesondere
Polyoxyäthylen-Sorbitanmonostearat (tween 61), Polyoxyäthylen-
Tristearat (tween 65), Sorbitan-Tristearat (span 65) sowie
Polyoxyäthylen-Sorbitan-Bienenwachs-Derivate.

Man kann dem Gemisch aus Harz, Wachs und Farbstoffen auch andere
für die Eigenschaften der "Master Batche" möglicherweise nützlichen Additive zusetzen, wie z. B. Stabilisatoren, flammhemmende Substanzen, UV-Adsorber, optische Aufheller, Blockingmittel
und/oder Treibmittel.

Damit die Vermischung der Harze mit Farbstoffen und Wachsen einen
günstigen Verlauf nimmt und Anbackungen der Masse an den Heizflächen des Mischers vermieden werden, verwendet man für das
Verfahren mit Rührelementen ausgestattete Mischer, deren Rührflügel nicht nur das Material in sich vermischen, sondern sich
gleichzeitig an allen beheizten Teilchen des Mischers dicht vorbeibewegen und somit vorübergehend Anbackungen an den Heizflächen wieder ablösen. Geeignet sind demgemäß insbesondere wandbeheizte Behälter, die mit ihren Rührern auch die Innenwand des
Behälters vollständig bestreichen. Elektrisch beheizte Behälter
sind ebenso geeignet wie doppelwandige Behälter, die über ein
Wärmetauschmittel, z. B. auch Dampf, beheizt werden.

## Beispiel 1

500 Gew.-Teile Ultramarinblau einer Körnung 1 - 14 μm werden mit 125 Gew.-Teilen Hoechst-Wachs C (Amidwachs, Erstarrungspunkt 135 - 140 ° C) innig vermischt und das Gemisch portionsweise auf 75 Gew.-Teilen eines auf 160 ° C aufgeheizten Polystyrols, das im wesentlichen aus Granulat der Körnung 2 - 6 mm besteht, aufgegeben. Dabei wird das Granulat mittels Rührer (300 Umdrehungen/min) in Bewegung gehalten. Die gebildete rieselförmige Masse läßt man nach Abkühlen auf 30 ° C über einen Bodenverschluß des Behälters ablaufen und füllt sie ab. Man erhält ein nichtstäubendes Harz-Farbkonzentrat einer Körnung etwa 3 - 7 mm mit sehr guter Eignung zur Einfärbung von Polystyrol.

## Beispiel 2

250 Gew.-Teile $TiO_2$-Pigment einer Korngröße 0,1 - 1 μm werden mit 80 Gew.-Teilen Polyäthylenwachs der Firma Hoechst mit einem Erstarrungspunkt von 127 - 138 ° C innig verschmolzen und allmählich in einen auf 150 ° C aufgeheizten, mit 50 Gew.-Teilen Polyvinylchlorid, Körnung 2 - 4 mm, gefüllten Mischer gegossen. Unter Heizen und Rühren mit einer Geschwindigkeit von 450 Umdrehungen/min wird die Masse 10 Minuten lang in Bewegung gehalten. Sodann läßt man die rieselfähige Masse erkalten und leert den kippbaren Behälter über eine Rutsche, über die das Material in bereitgestellte Säcke rieselt. Man erhält ein nichtstäubendes, weißes Harz-Farbkonzentrat einer Körnung 2,5 - 5 mm, das sehr gut für die Einfärbung von Polyvinylchlorid, z. B. Polyvinylchlorid-Compounds, geeignet ist. Diesbezügliche Folien aus Polyvinylchlorid von 1 mm Stärke zeigen eine nahezu homogene Einfärbung.

Zum Vergleich wird nach der gleichen Vorschrift das $TiO_2$ mit Span 60 bei einer Temperatur von 60 ° mit Polyvinylchlorid vermischt und zu "Master Batchen" verarbeitet. Die Einfärbung von Polyvinylchlorid mit der gleichen Menge an "Master Batch" (Gewichtsverhältnis 10 : 1) ergibt eine absolut homogen eingefärbte Folie. Dieser Vergleich zeigt die besondere Wirksamkeit von sorbitanhaltigen Wachsen mit Tensidcharakter.

Beispiel 3

Ein Gemisch aus 40 Gew.-Teilen eines Phtalocyanids (Körnung 0,2 - 2 µm) und 60 Gew.-Teilen Span 65 wird in einen mit 100 Gew.-Teilen Polyäthylen (Körnung 3 - 5 mm) gefüllten, auf 90 ° C aufgeheizten Behälter gegeben. Das Granulat wird mit 400 Umdrehungen/min gerührt und kühlt sich allmählich auf 50 ° C ab.

- 8 -

Die fertige rieselfähige Masse läßt man nach vollständiger Abkühlung über ein Bodenventil des Rührbehälters auslaufen. Man
erhält ein gefärbtes "Master Batch" einer Körnung 3,5 - 5,5 mm.
Es eignet sich besonders für die Einfärbung von Polyäthylen.

Beispiel 4

70 Gew.-Teile TiO$_2$ werden mit 3 Gew.-Teilen Russ und 10 Gew.-
Teilen Span 65 innig vermischt und danach in 50 Gew.-Teilen
eines Butadien-Styrol-Copolymeren (Körnung 1 - 4 mm) eingetragen, das auf 65 ° C aufgeheizt war.

Das Granulat wird mit 300 Umdrehungen gerührt und die Masse im
Behälter auf 50 ° C abgekühlt. Man setzt nochmals 5 Gew.-Teile
Span 65 zu, läßt nach weiterem Rühren während 5 Minuten vollständig abkühlen und zieht die rieselfähige Masse über eine am
Boden des Rührbehälters eingebaute Zellenradschleuse aus dem
Behälter ab. Man erhält ein graues "Master Batch" der Korngröße
etwa 1,5 - 4,5 mm. Dieses "Master Batch" eignet sich z. B. für
die Einfärbung von Polystyrol, Polyäthylen, Polypropylen, Polyvinylchlorid, Polyäthylen-Polyvinylacetat, Acryl-Butadienstyrol
und ähnliche Kunststoffe.

Gemäß den vorstehenden Beispielen werden die einzelnen Komponenten in diskontinuierlich arbeitenden Mischern miteinander vereinigt. Unter Vermischen sind im Sinne der Erfindung verständlicherweise auch alle anderen bekannten Mischtechniken zu verstehen, mit denen ein geschmolzenes Material an ein Pulver oder Granulat angeschmolzen wird. Daher kann das Verfahren auch im kontinuierlichen Betrieb in einem Drehrohrofen durchgeführt werden. Weiterhin kann man die Harzgranulate mit einem Wachs-Farbstoffgemisch besprü,hen oder das in einen durchlässigen Behälter gefüllte Harz kurzfristig in das verflüssigte, den Farbstoff enthaltende Wachs eintauchen.

Patentansprüche
_____

1. Verfahren zur Herstellung von Harz-Farbkonzentraten durch
   Einfärben von Harzen, dadurch gekennzeichnet, daß pulverförmige oder körnige Harze bei einer Temperatur von etwa
   35 - 150 ° C, vorzugsweise bei 40 - 90 ° C, mit einem Farbstoff und einem bei Normaltemperatur festen, aber bei der
   Mischtemperatur schmelzendem Wachs innig vermischt und diese Gemische abgekühlt werden.

2. Verfahren nach Anspruch 1, dadurch gekennzeichnet, daß Farbstoff und Wachs als Gemisch in das auf die Einfärbungstemperatur erhitzte Wachs eingemischt werden.

3. Verfahren nach Anspruch 1 - 2, dadurch gekennzeichnet, daß
   auf 1 Gew.-Teil Harz 1/10 - 1/2 Gew.-Teile an Wachs zugesetzt wird.

4. Verfahren nach Anspruch 1 - 3, dadurch gekennzeichnet, daß
   auf 1 Gew.-Teil Harz 1/2 - 6 Gew.-Teile an Farbstoff zugesetzt werden.

5. Verfahren nach Anspruch 1 - 4, dadurch gekennzeichnet, daß
   als Wachskomponente ein Wachs mit Tensid-Charakter verwendet
   wird.

6. Verfahren nach Anspruch 5, dadurch gekennzeichnet, daß als Wachs ein sorbitanhaltiges Wachs mit Tensid-Charakter dient.

7. Harz-Farbkonzentrate, hergestellt nach den Ansprüchen 1 - 6, bestehend aus Agglomeraten aus Harzgranulaten, verbunden mit einem Wachs-Farbstoffgemisch.

0004268

ABGEÄNDERTE
ANSPRÜCHE

21. 06. 79

Patentansprüche

1. Verfahren zur Herstellung von Farbkonzentraten für die
Einfärbung von Harzen durch Vereinigen von Pigmenten
und Wachsen mit fein- bis grobkörnigen Harzen zu einem
Material mit hohem Pigmentgehalt, dadurch gekennzeichnet, daß pulverförmige Mischungen aus Wachsen und Pigmenten in einem Mischer mit auf über den Schmelzpunkt
der Wachskomponente von etwa 35 - 150$^{o}$ C, vorzugweise
40 - 90$^{o}$ C, erhitzten Harzen vermischt und in Form eines rieselfähigen Materials aus dem Mischer abgezogen
werden.

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int.Cl.²) |
|---|---|---|---|
| | DE – A – 2 152 760 (FERRO) <br> * Ansprüche 1,2; Seite 6, Zeile 27 – Seite 7 * <br><br> --- <br><br> US – A – 2 512 459 (G.E. HAMILTON) <br> * Ansprüche 4,6; Spalte 3, Zeilen 25-38; Spalte 9, Zeile 68 – Spalte 10, Zeile 2; Spalte 8, Zeile 12 – Spalte 9, Zeilen 15-28 * <br><br> --- <br><br> DE – B – 1 082 045 (HOECHST) <br> * Beispiele 2,3,5 * <br><br> --- <br><br> DE – A – 2 260 213 (STAMICARBON) <br> * Ansprüche 1,2; Seite 5, Zeilen 17-36 * <br><br> --- <br><br> DE – A – 2 318 197 (KARL FINKE) <br> * Anspruch 1; Seite 2, Zeilen 14-20 * <br><br> ------ | 1 <br><br><br><br> 1 <br><br><br><br><br><br><br> 1,3,4, 7 <br><br><br><br> 1,2 <br><br><br><br> 5,6 | C 08 J 3/22 <br><br><br><br><br><br><br><br><br><br> **RECHERCHIERTE SACHGEBIETE (Int. Cl.²)** <br><br> C 08 J 3/22 |
| A | | | |

Der vorliegende Recherchenbericht wurde für alle Patentansprüche erstellt.

| Recherchenort | Abschlußdatum der Recherche | Prüfer |
|---|---|---|
| Den Haag | 27-02-1979 | HALLEMEESCH |